# EUROPEAN PATENT APPLICATION

(11) **EP 2 889 166 A1**
(43) Date of publication of application: **01.07.2015**
(21) Application number: 14191884.7
(22) Date of filing: 05.11.2014
(51) Int. Cl.: B60D 1/36, B60D 1/24, B60D 1/62, A01B 79/00, B60D 1/00

(54) **Agricultural implement connection control**

(30) Priority: 20.12.2013 GB 201322746
(71) Applicant: AGCO International GmbH, 8212 Neuhausen am Rheinfall (CH)
(72) Inventor: Muller, Thomas, 87616 Marktoberdorf (DE); Pichlmaier, Benno, 87616 Marktoberdorf (DE); Kreitmayr, Jakob, 87616 Marktoberdorf (DE)
(74) Representative: AGCO Intellectual Property Department

(57) **Abstract**

An agricultural vehicle (10) has an implement connection hitch (22) including means for controllably moving the same relative to a rear axle (17) of the vehicle under the direction of a vehicle control system (20, 21). Under user control from a cab (11) of the vehicle, the hitch is moved rearward from the vehicle until it reaches a first position at a chosen distance from the rear axle. Following the attachment of a known implement (19) to the hitch, the control system retracts the hitch and implement toward the rear axle to a second position at a distance from the rear axle determined in the control system (20) optionally at least partly on the basis of the identity of the implement. The identity of the implement may be input (21) by the user or determined via an ISOBUS connection (32).

## Description

The present invention relates to the attachment of working implements to agricultural vehicles, and in particular to methods for the attachment which may be implemented where the vehicle is equipped with a mounting hitch or similar connector which hitch is movable relative to the vehicle, and further to an agricultural vehicle having such a hitch and a control system for at least partially automated control of the hitch.

An example of such a movable hitch is described in International Patent application WO 90/06240 and comprises a towing hook attached at one end of a towing bar, with the other end of the towing bar slidably mounted in a frame. The hitch frame is pivotably mounted to the chassis of a tractor and enables the towing hook to be raised or lowered by rotating the frame up or down about the pivoting mount. The towing hook is further movable towards and away from the vehicle chassis by operation of a hydraulic cylinder which controls the sliding movement of the towing bar within the frame. Further examples of such movable hitches are described in German Patent application DE 100 65 161 A1 and European Patent application EP 1 428 696 A1.

It will be understood that the form of connecting means will be determined by the configuration of implement that is to be coupled. For example, a rigid transverse beam with spaced connectors may be used for semi-mounted implements, such as certain configurations of plough, whereas a quick release hook or a ball hitch coupling may be used for towed implements such as sprayers or balers. The term "connection hitch" as used herein is intended to encompass all such arrangements.

One particular benefit of having a movable connection hitch arises in the connection or mounting of implements, whereby small adjustments in the relative position of tractor and implement to align for connection may be made by moving the hitch rather than the whole tractor.

A downside of having a movable connection hitch is in terms of managing axle loading. If an implement is mounted on the hitch at the furthest extent of its movement away from the vehicle rear axle, the extra leverage about the axis of the rear axle will lead to the front axle raising and hence require additional front-mounted weights to counterbalance the implement. If, on the other hand, the hitch is brought in to its closest position to the rear axle, there is a risk of the implement fouling the rear wheels, especially during turning.

It is an object of the present invention to mitigate at least some of these problems.

In accordance with a first aspect of the present invention there is provided an agricultural vehicle comprising:
a drivers cab;
an implement connection hitch including means for controllably moving the same relative to a rear axle of the vehicle;
a control system controlling movement of the connection hitch;
a control in the vehicle cab coupled with the control system, the operation of which causes the hitch to move rearward from the vehicle until it reaches a first position at a chosen distance from the rear axle;
wherein the control system is configured, following the attachment of an implement to the hitch, to retract the hitch and implement toward the rear axle to a second position at a distance from the rear axle determined in the control system.

Further in accordance with the present invention there is provided, in an agricultural vehicle having a drivers cab and an implement connection hitch moveably mounted adjacent a rear axle of the vehicle, a method of attaching an implement to the hitch comprising:
actuating a control in the vehicle cab and thereby causing a mechanism of the vehicle to move the hitch rearward from the vehicle until it reaches a distance from the rear axle at which it is visible to an operator in the vehicle cab;
attaching an implement to the hitch; and
retracting the hitch and implement toward the rear axle and under control of the vehicle to a position at a distance from the rear axle.

The connection hitch may be retracted under control of the vehicle to a position determined as giving optimum axle loading, whilst also avoiding fouling of the wheels during manoeuvring.

Optionally, the connection hitch may be retracted under control of the vehicle control system to a positioned determined with knowledge of the identity of the implement. The identity of the implement may be signalled to the vehicle by an ISOBUS wired or wireless connection between implement and vehicle, or it may be input to the vehicle by an operator in the vehicle cab. This latter arrangement has a benefit in that, as with the wireless ISOBUS configuration, it permits the operator to complete hitching and adjustment of an implement without leaving the vehicle cab.

Further features of the present invention are recited in the attached claims, to which reference is now made, and/or will become apparent from the following description of example embodiments.

The present invention will now be described, by way of example only, with reference to the accompanying drawings in which:-
Figure 1 shows a schematic view of a tractor having a controllably movable implement connection hitch;
Figure 2 is a perspective view of an example of movable implement connection hitch demounted from a tractor; and
Figure 3 is a flow chart representation of an implement mounting process of the tractor of Figure 1.

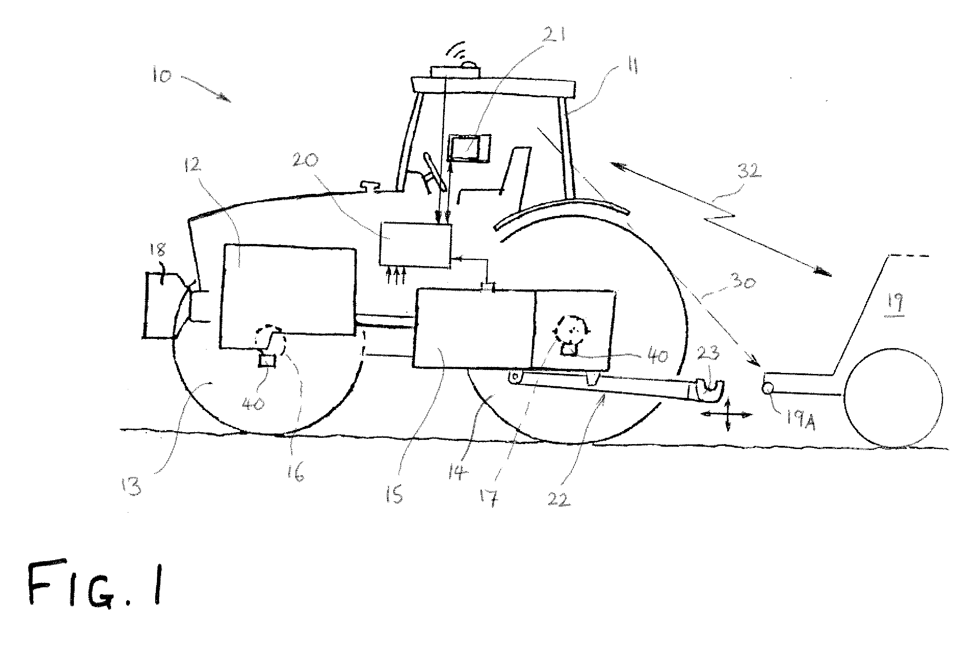

Referring initially to Figure 1 of the drawings, a tractor 10 has a cab 11 and engine 12 which drives front and rear wheels 13 and 14 via a transmission represented at 15. The engine powers other (not shown) components of the tractor such as an engine cooling fan, hydraulic pumps, air compressors and an electrical generator. The front wheels 13 are mounted on a front axle indicated at 16 and rear wheels 14 on a rear axle indicated at 17. A front weight 18 is mounted on a weight support attached to the front of the tractor chassis: as will be described in further detail below, the amount of weight applied to the front of the vehicle will be determined at least in part by the characteristics of an implement 19 to be coupled at the rear of the tractor 10.

Mounted within the cab 11 is a tractor control system which includes a processing unit 20 and a display terminal 21, which terminal utilises touch-screen technology and/or a plurality of discrete control devices (switches, buttons etc.) to also act as an input device for the control system.

At the rear of the tractor, below the back axle 17, there is mounted a movable connection hitch assembly 22 having at its rearward end a coupling 23 for the implement 19 to be connected. In the embodiment of Figure 1, the coupling is a transverse bar having a pair of spaced apart quick-coupling hooks replicating the position of the distal ends of the lower links of a three-point linkage and providing a means for coupling an implement for semi-mounted operation. The connection hitch assembly is controllably operable to move the coupling in three dimensions:
1. longitudinally towards and away from the rear axle generally in a direction parallel to the direction of travel of the tractor;
2. vertically up and down relative to the surface on which the tractor is standing; and
3. laterally either side of a longitudinal centre line of the tractor.

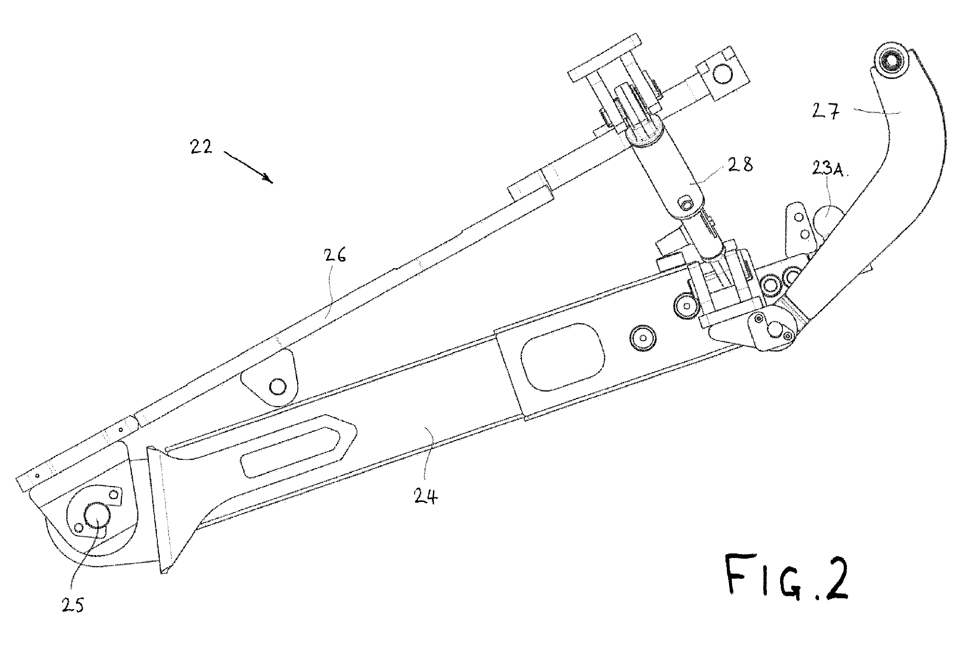

Figure 2 shows in greater detail an embodiment of movable connection hitch assembly 22 demounted from the tractor 10. The embodiment differs slightly with respect to Figure 1 in that transverse bar and hook coupling 23 is replaced by a ball hitch 23A.

The main component of the connection hitch assembly is a telescopically extendible body 24 which may be extended or contracted by means of a hydraulic cylinder (not shown) within the body. At the end opposite to the ball hitch connector 23A there is a swinging connection 25 by means of which the body 24 is pivotably coupled to a belly plate 26, which plate 26 is coupled to the chassis of the tractor to mount the connection hitch assembly. As will be recognised, the belly plate 26 may be omitted and the swinging connection 25 may be mounted direct to the chassis.

A pair of lift arms 27 are pivotably coupled at either side of the body 24 with their respective free ends being coupled to hydraulic cylinders (not shown) at the rear of the tractor, which arrangement is operable to raise and lower the connector 23A by causing the body 24 to pivot about the connection 25. Movement of the connector 23A in the lateral direction is provided by a pair of hydraulic cylinders 28 each pivotably coupled at a first end to the body 24 and at the other end to the tractor chassis. Controlled extension of one of the cylinders 28 (with corresponding contraction of the other) causes the body 24 to pivot in a substantially horizontal plane about the swinging connection 25. With control of all the cylinders, the lateral, longitudinal and vertical position of the connector 23A relative to the rear axle (17; Fig. 1) may be set.

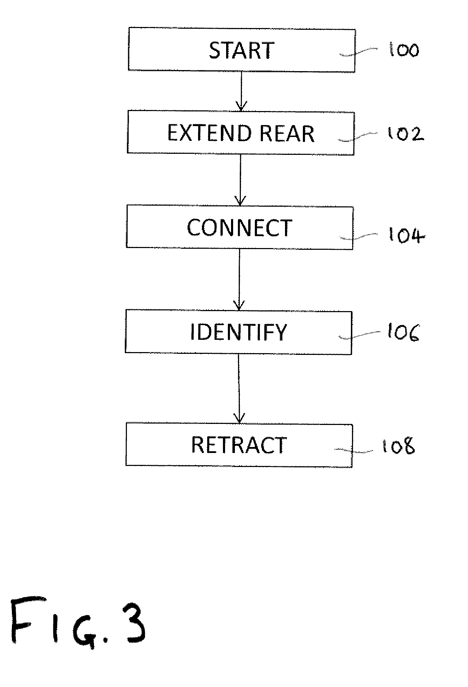

Referring additionally to the flow chart of Figure 3, the process for coupling the implement 19 to the tractor 10 will now be described, starting at step 100 where the tractor is in a parked position relative to the implement 19 (as in Figure 1).

At step 102, the operator actuates a control on display terminal 21 in the cab 11 which causes the connection hitch mechanism 22 to extend moving the hitch connector 23 rearward from the tractor until it reaches a distance from the rear axle at which it is visible to the operator in the vehicle cab: this position is indicated by dashed line 30 in Figure 1.

At step 104, the implement 19 is attached to the hitch connector 23. This step may involve further extending the hitch mechanism and/or moving the tractor to align the connector of the implement 19A with the hitch connector 23, and may additionally involve lowering the hitch mechanism to bring the connector 23 into position below the implement connector 19A and then raising it to engage the connection. Such manoeuvres of the hitch connector 23 are suitably directed by the operator from the cab - an operation made possible by the extension of the hitch 23 to the point at which it is visible from the cab.

In an optional step 106, the implement is identified to the control system processing unit 20. This identification may be achieved by means of a wired or wireless signal (represented by arrow 32) according to the ISOBUS standard and sent from implement 19 to tractor 10, or the identity may be input by the operator via display terminal 21. The identification may comprise a simple make/model number, or a menu selection from a list of the operator's available implements. The identification enables characteristics of the implement to be obtained (either from on-board storage or wirelessly from a remote location) which characteristics are then utilised for the next step.

At step 108, suitably following an indication from the operator that the mechanical engagement of hitch coupling 23 and implement coupling 19A is complete, the hitch and implement are retracted toward the rear axle and under control of the tractor control system processing unit 20 to a retracted position. The retracted position may suitably be at a distance from the rear axle determined at least partly by the characteristics obtained through identification of the implement. One characteristic may be the length of the forward coupling of the implement which would determine the minimum turning circle for the tractor and implement combination at various degrees of contraction for the connection hitch assembly.

In addition to the known weight of front weight 18, the tractor 10 is suitably provided with sensors 40 on at least the front 16 and rear 17 axles. With a known loading characteristic (such as overall weight and distribution) for the implement, the said position at a distance from the rear axle may be further determined by an axle loading of a front axle and/or the rear axle of the tractor. By retracting the hitch as close as possible to the rear axle, the less the pivoting effect and hence the less weight is required on the front of the tractor to counterbalance the implement weight. With such optimisation of the implement hitch position, leading to better management of axle loading, the lower the required tyre pressures and the lower the fuel consumption that results from the need to carry less weight on the front.

As will be recognised, variations are possible to the above described apparatus and method. For example, in the method of Figure 3, step 106 may be performed prior to step 104 with the identity of the implement to be connected being established prior to the mechanical coupling. Also, where the connection hitch mechanism of the tractor is operable to move the hitch vertically, the retracted position of the hitch at a distance from the rear axle is preferably additionally at a height, determined at least partly by the identity of the implement, above a surface on which the tractor stands. Furthermore, in the latter case the lowering of the hitch prior to effecting mechanical connection may be effected automatically by the control system following identification of the implement and as the extension of the connection hitch towards it commences. Although the exemplary embodiments refer to a tractor, it will be readily understood that the present invention is applicable to any agricultural vehicle having an implement connection hitch.

In the foregoing, the applicants have described an agricultural vehicle having an implement connection hitch including means for controllably moving the same relative to a rear axle of the vehicle under the direction of a vehicle control system. Under user control from a cab of the vehicle, the hitch is moved rearward from the vehicle until it reaches a first position at a chosen distance from the rear axle. Following the attachment of an implement (suitably a known implement) to the hitch, the control system retracts the hitch and implement toward the rear axle to a second position at a distance from the rear axle determined in the control system: the second position may be determined at least partly by the identity of the implement. The identity of the implement may be input by the user or determined via an ISOBUS connection.

## Claims

1. An agricultural vehicle comprising:
a drivers cab;
an implement connection hitch including means for controllably moving the same relative to a rear axle of the vehicle;
a control system controlling movement of the connection hitch;
a control in the vehicle cab coupled with the control system, the operation of which causes the hitch to move rearward from the vehicle until it reaches a first position at a chosen distance from the rear axle;
wherein the control system is configured, following the attachment of an implement to the hitch, to retract the hitch and implement toward the rear axle to a second position at a distance from the rear axle determined in the control system.

2. An agricultural vehicle as claimed in claim 1, wherein the implement is a known implement and wherein the second position is determined in the control system at least partly by the implement.

3. An agricultural vehicle as claimed in claim 2, further comprising an ISOBUS connection to the control system, wherein the control system is arranged to receive data identifying a connected implement via the ISOBUS connection.

4. An agricultural vehicle as claimed in claim 3, wherein the ISOBUS connection is a wireless connection.

5. An agricultural vehicle as claimed in claim 2, wherein the cab further contains user operable input means by operation of which an operator of the vehicle may input the identity of a connected implement to the control system.

6. In an agricultural vehicle having a drivers cab and an implement connection hitch moveably mounted adjacent a rear axle of the vehicle, a method of attaching an implement to the hitch comprising:
actuating a control in the vehicle cab and thereby causing a mechanism of the vehicle to move the hitch rearward from the vehicle until it reaches a distance from the rear axle at which it is visible to an operator in the vehicle cab;
attaching an implement to the hitch; and
retracting the hitch and implement toward the rear axle and under control of the vehicle to a position at a distance from the rear axle.

7. A method according to claim 6, wherein the implement is a known implement and the position at a distance from the rear axle is determined at east partly by the identity of the implement.

8. A method according to claim 7, wherein the identity of the implement is signalled to the vehicle by an ISOBUS connection between implement and vehicle.

9. A method according to claim 7, wherein the identity of the implement is input to the vehicle by an operator in the vehicle cab.

10. A method according to any of claims 6 to 8, wherein the said position at a distance from the rear axle is further determined by an axle loading of a front axle and/or the rear axle of the vehicle.

11. A method according to any of claims 6 to 10, wherein the said mechanism of the vehicle is further operable to move the hitch vertically, and the said position of the hitch at a distance from the rear axle is additionally at a height, determined at least partly by the identity of the implement, above a surface on which the vehicle stands.

12. A method according to claim 10, wherein the step of moving the hitch rearward further comprises moving it downwardly.
